# EUROPEAN PATENT SPECIFICATION

(11) **EP 3 629 456 B1**
(45) Date of publication and mention of the grant of the patent: **21.08.2024**
(21) Application number: 18197659.8
(22) Date of filing: 28.09.2018
(51) Int. Cl.: H02K 15/03, H02K 1/2733, H02K 1/274

(54) **ROTOR AND METHOD FOR MANUFACTURING A ROTOR OF AN ELECTRIC MOTOR**
ROTOR UND VERFAHREN ZUR HERSTELLUNG EINES ROTORS EINES ELEKTROMOTORS
ROTOR ET PROCÉDÉ DE FABRICATION D'UN ROTOR D'UN MOTEUR ÉLECTRIQUE

(43) Date of publication of application: 01.04.2020
(73) Proprietor: Valeo Systèmes d'Essuyage, 78322 Le Mesnil Saint Denis (FR)
(72) Inventor: SERVIN, Alain, 86108 CHATELLERAULT (FR); MARROUX, Olivier, 86108 CHATELLERAULT (FR); SCHAEUBLE, Michael, 74321 BIETIGHEIM-BISSINGEN (DE)
(74) Representative: Valeo Visibility

(56) References cited:
- EP-A2- 1 515 419
- EP-A2- 2 573 917
- CN-A- 103 986 252
- DE-B3- 102016 219 974

## Description

The present invention relates to a rotor and to a method for manufacturing a rotor for an electric motor, preferably a brushless motor, for a wiper system of an automotive vehicle.

Electric motors comprise, in the most general sense, two main components: a stator, which remains stationary; and a rotor, which rotates within the stator. Both the rotor and the stator comprise means for generating a magnetic field, the magnetic field of the stator interacting with the magnetic field of the rotor in such a way as to drive the latter in rotation.

One configuration of particular interest is the brushless motor, wherein the rotor comprises a chassis holding a plurality of permanent magnets while the stator comprises electromagnetic excitation coils. This chassis may be, for instance, cylinder-, disc-, bell-, or puck-shaped.

The electric motor is configured so that when the coils are powered with electric current, a magnetic field is created. The magnetic field of the stator excitation coils interacts with the magnetic field of the rotor permanent magnets, exerting a force on the rotor and causing a rotational movement of the magnets about an axis of rotation.

It is sometimes advantageous to provide the brushless motor with a gear reduction drive. Also, in a brushless motor, the excitation coils of the stator are switched by an electronic control system, which energizes the excitation coils with precise timing so as to generate the desired rotation of the rotor.

In some implementations, the rotor further comprises a shaft comprising an endless screw whose external threads mesh with teeth of a wheel, the wheel being fixed to an output shaft of the motor.

The publications EP 2 573 917 A2 and DE 10 2016 219974 B3 represent two examples of brushless electric motors as known in the prior art.

The rotor magnets are usually fixed to the chassis with strong glue that can be a harmful substance, in particular to those assembling the motor.

Additionally, the chassis might not be firmly attached to the shaft, which degrades the performance and reliability of the electric motor.

Furthermore, there is a need to make the manufacturing method as simple as possible to reduce its cost and time.

The present invention aims at overcoming or mitigating at least some of these shortcomings. The invention is defined in in the independent claims 1 and 5. Further embodiments of the invention are defined in the dependent claims 2 - 4,6 and 7.

To this end, the present invention relates to a method for manufacturing a rotor for an electric motor of a wiper system for an automotive vehicle, the method comprising a step of overmolding at least one magnet so as to form a chassis of the rotor, wherein overmolding material covers a first end of the shaft, a second end of said shaft being free from overmolding.

According to the invention, the method further comprises a step of positioning a first ball bearing in the chassis of the rotor, an outer ring of the first ball bearing being positioned against a seat formed integrally with said chassis and an inner ring of said first bearing being configured to be mounted upon a chassis of the motor; and a step of positioning a second ball bearing, an inner ring of the second ball bearing being configured to be fixedly mounted in a chassis of the motor.

The claimed method is particularly easy to implement, reducing its cost and time.

Also, thanks to the present invention, forming the chassis by overmolding ensures a good cohesion of the rotor and optimized performances of the motor.

According to another aspect of the invention, at least one polar sheet is overmolded with said at least one magnet on the shaft.

According to another aspect of the invention, the rotor comprises a magnet, said magnet having a cylindrical shape.

According to another aspect of the invention, a portion of at least one magnet is exposed along at least one top line.

The invention also relates to a rotor for an electric motor of a wiper system for an automotive vehicle, comprising a chassis and a shaft, said chassis comprising at least one magnet overmolded on the shaft, wherein overmolding material covers a first end of the shaft, a second end of said shaft being free from overmolding.

According to the invention, the rotor further comprises a first ball bearing, an outer ring of said first ball bearing being positioned against a seat formed integrally with said chassis and an inner ring of said first bearing being configured to be mounted upon a chassis of the motor; and an inner ring of a second ball bearing being fitted on said second end of the shaft and an outer ring of said second ball b=earing being configured to be fixedly mounted in a chassis of the motor.

The invention also relates to an electric motor comprising a rotor as already described.

The invention also relates to a wiper system comprising an electric motor as already described.

The present invention is now described by way of example with reference to the accompanying drawings in which:
- Figure 1 is a perspective view of an electric motor comprising a rotor as per the present invention;
- Figure 2 is a perspective view of a rotor according to a first embodiment of the present invention;
- Figure 3 is an axial section of the rotor of figure 2;
- Figure 4 is an exploded view of the rotor of figure 2;
- Figure 5 is a perspective view of a rotor according to a second embodiment of the present invention;
- Figure 6 is an axial section of the rotor of figure 5;
- Figure 7 is an exploded view of the rotor of figure 5;
- Figure 8 is a perspective view of a rotor according to a third embodiment of the present invention; and
- Figure 9 is a perspective view of a rotor according to a third embodiment of the present invention, the overmolding not being illustrated.

### Electric motor

The invention relates to a rotor 1 of an electric motor 2 for a wiper system and the associated method for manufacturing the rotor 1.

In particular, the electric motor 2 is of the brushless type.

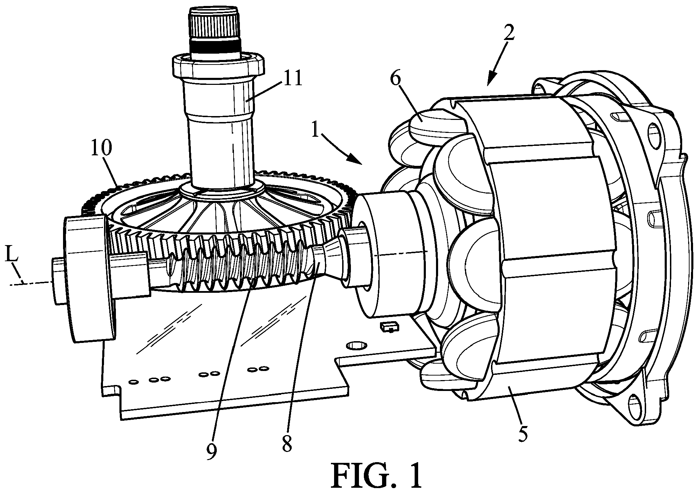

As can be seen from figure 1, the electric motor 2 comprises a stator 5.

The stator 5 comprises a plurality of electromagnetic excitation coils 6. The rotor 1 comprises at least one multi-pole magnet 7, detailed later and mounted to be driven in a rotational movement about an axis of rotation, referenced L.

The electric motor 2 is configured so that the rotor 1 rotates in the stator 5, which causes a rotation of a shaft 8 extending along the axis of rotation L.

The shaft 8 comprises a threaded portion 9 mounted to be engaged by a gearwheel 10.

The wheel 10 rotates an output shaft 11.

The output shaft 11 is substantially perpendicular to the drive shaft 8.

### Rotor: first embodiment

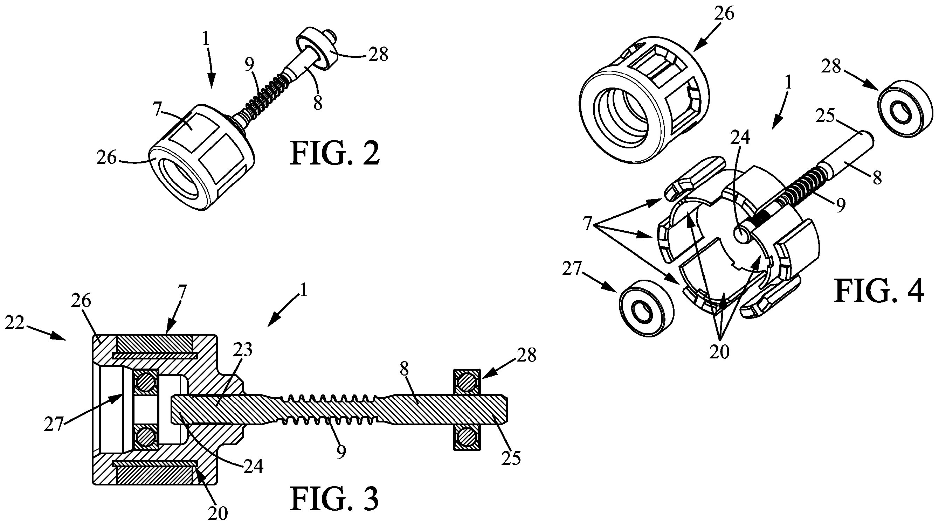

The rotor 1 is now described in reference to the embodiment of figures 2-4.

As already explained, the rotor 1 comprises at least one magnet 7.

On figure 1, the rotor 1 comprises six permanent magnets 7 disposed in a cylindrical arrangement as shown.

In the embodiment depicted in Figures 2 to 4, the rotor 1 also comprises three polar sheets 20 for closing lines of the magnetic field generated by the magnetic coils. The polar sheets 20 are generally fabricated from a material having magnetic properties appropriate for use in an electric motor, such as silicon steel.

However, it should be understood that in any particular embodiment the polar sheets might not be necessary to ensure the closure of the rotor magnetic field, depending on the form and composition of the magnets.

As can be seen from the figures, the magnets 7 and the polar sheets 20 are overmolded on a portion 23 of the shaft 8 so as to form a chassis 22, which ensures a good cohesion of the rotor 1.

More precisely, the overmolding material 26 of the chassis 22 covers the edges of the magnets 7 and polar sheets 20 as well as the portion 23 of the shaft 8.

In this manner, the magnets 7 and polar sheets 20 are positioned and retained in a single step of fabricating the chassis 22. The chassis 22 is thus formed without the need for any additional structure between it and the shaft.

The portion 23 of the shaft 8 is chosen so that a first end 24 of the shaft 8 is disposed inside the chassis 22 while a second end 25 of the shaft 8 is disposed outside the chassis 22.

The rotor 1 also comprises first and second bearings 27, 28 for guiding the rotation of the shaft 8, namely ball bearings.

Each ball bearing comprises an outer ring and an inner ring that is coaxial with the outer ring, balls being arranged between the outer and inner rings.

Of course, it will be recognized that in other embodiments,which do not form part of the claimed invention, other types of bearings might be employed with equal facility.

The first bearing 27 is disposed in the chassis 22 while the second bearing 28 is disposed around the end 25 opposite the chassis 22.

According to this configuration, the outer ring of the second bearing 28 is fixedly mounted with a chassis (not shown) of the engine 1 while the inner ring of the second bearing 28 rotates, fitted on the end 25 of the shaft 8.

The outer ring of the first bearing 27 is mounted in the chassis 22, against a seat of the chassis 22, and the inner ring is fixedly mounted to a chassis of the motor (not shown).

The end 24 of the shaft 8 is thus advantageously guided by the first bearing 27, without requiring a shaft length such that its end protrudes beyond the chassis 22, contrary to the state of the art known to the Applicant.

The internal position of the first bearing 27 also allows a recovery of forces at the chassis 22, which is not possible with the rotors known in the prior art.

The outer ring of the first bearing 27 is fixed to the chassis for instance locked by an elastic deformation ring.

### Rotor: second embodiment

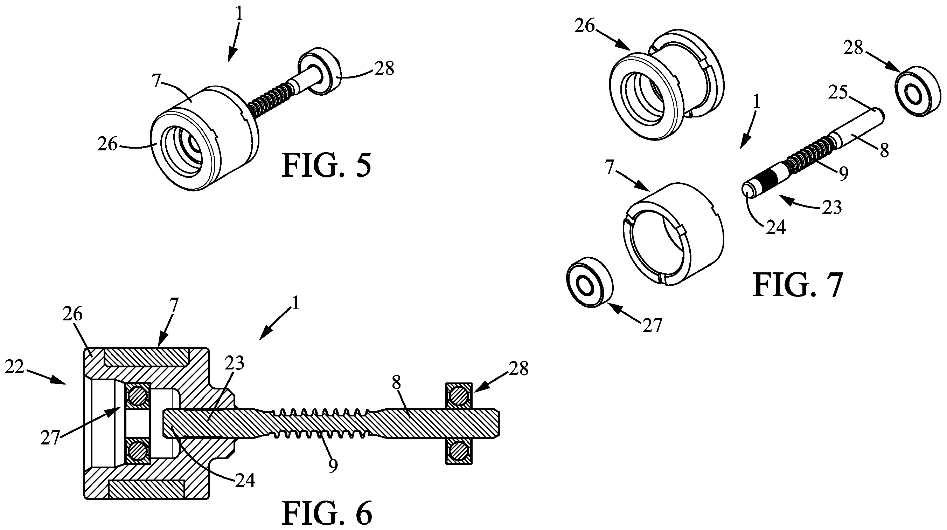

The rotor 1 is now described in reference to the embodiment of figures 5 to 7.

According to this embodiment, the rotor 1 comprises one permanent magnet 7, provided in the form of a hollow cylinder.

As can be seen from figures 5 to 7, the magnet 7 is overmolded on a portion 23 of the shaft 8 so as to form a chassis 22.

More precisely, the overmolding material 26 of the chassis 22 covers the edges of the magnet 7 as well as the portion 23 of the shaft 8.

In this particular embodiment, no polar sheet is needed because the material and configuration of the magnet close the field lines of the magnetic circuit of the rotor.

The portion 23 of the shaft 8 is chosen so that an end 24 of the shaft 8 is disposed inside the chassis 22 while an opposite end 25 of the shaft 8 is disposed outside the chassis 22.

The overmolding material 26 of the chassis 22 covers the edges of the magnets 7.

The rotor 1 also comprises first and second bearings 27, 28 for guiding the rotation of the shaft 8, namely ball bearings.

Each ball bearing comprises an outer ring and an inner ring that is coaxial with the outer ring, balls being arranged between the outer and inner rings.

The first bearing 27 is disposed in the chassis 22 while the second bearing 28 is disposed around the end 25 opposite the chassis 22.

According to this configuration, the outer ring of the second bearing 28 is fixedly mounted with a chassis (not shown) of the motor 1 while the inner ring of the second bearing 28 rotates, fitted on the end 25 of the shaft 8.

The outer ring of the first bearing 27 is mounted in the chassis 22, against a seat of the chassis 22 and the inner ring is fixedly mounted, for example on a bearing integral with the motor housing.

The end 24 of the shaft 8 is thus advantageously guided by the bearing 27, without requiring a shaft length such that its end protrudes beyond the bell, contrary to the state of the art known to the Applicant.

The internal positioning of the first bearing 27 also allows for a greater degree of control over the distribution of forces on the chassis 22, relative to the rotors known in the prior art.

The internal position of the bearing 27 also allows a recovery of forces at the chassis 22, which is not possible with the rotors known in the art.

The outer ring of the first bearing 27 is fixed to the chassis 22, for instance locked by an elastic deformation.

### Rotor: third embodiment

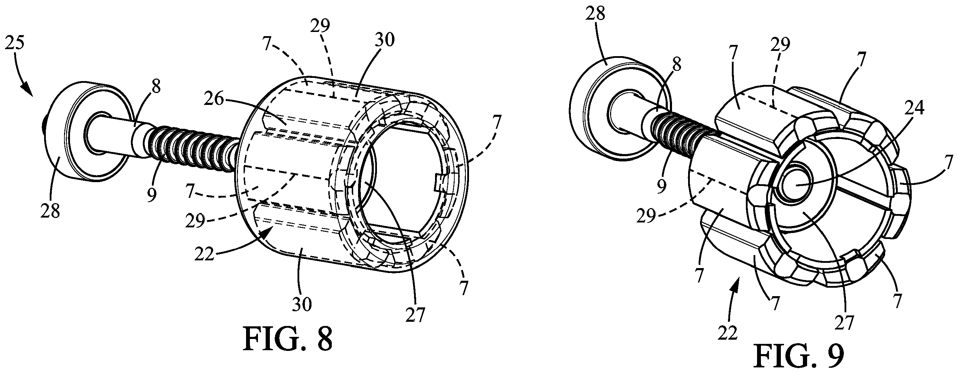

The rotor 1 is now described in reference to the embodiment of figures 8 and 9.

As can be seen from figure 6, the rotor 1 comprises six magnets 7 disposed about the shaft 8 in a cylindrical arrangement.

Each magnet has a curved shape, having the form of a segment of a hollow cylinder. In Figures 8 and 9 are moreover depicted a centerline 29, which is substantially coincident with the exposed area of the magnet 7 delimiting a top line 30, which is discussed in further detail below.

The rotor 1 of the third embodiment also comprises three polar sheets 20 for closing lines of the magnetic field generated by the magnets.

As in the previous embodiments it will be understood, however, that depending on the exact configuration and composition of the magnets, polar sheets may not necessarily be required to achieve this effect.

As can be seen from figure 8, the magnets 7 and the polar sheets 20 are overmolded on a portion of the shaft 8 so as to form a chassis 22, which ensures a good cohesion of the assembly.

More precisely, in this embodiment the overmolding material 26 of the chassis 22 covers all, or nearly all, of the surface of the magnets 7, embedding the magnets 7 within the overmolding material 26. In certain embodiments it may be that the magnets 7 are not entirely embedded within the overmolding material 26; in such cases it is preferable that the magnet 7 is exposed along a region substantially centered upon an axially-oriented midline 29 of the outer surface of the magnet 7. This exposed region is illustrated in Figure 8 as the top line 30.

The width of the top line 30 can be controlled to compensate for many dimensional factors and imperfections in the rotor 1 and its individual components. For instance, small out-of-round deviations in the rotor can be compensated without requiring any material be removed from the magnets 7. In this way, the rotor is made with a greater degree of dimensional precision, and notably with a reduced air gap between the rotor 1 and the stator 5.

The portion of the shaft 8 upon which the chassis 22 is overmolded is chosen so that a first end 24 of the shaft 8 is disposed inside the chassis 22 while a second end 25 of the shaft 8 is disposed outside the chassis 22.

The rotor 1 comprises first and second bearings 27, 28 for guiding the rotation of the shaft 8, namely ball bearings, as already described in relation with the first and second embodiments.

### Process for manufacturing

The invention is now described in relation with the process for manufacturing the rotor 1.

The method comprises a step of forming the chassis 22, by overmolding each magnet 7 and the polar sheets when needed on the portion 23 of the shaft 8.

The method then comprises a step of positioning the bearings 27, 28 in the already described position.

Overmolding in the manner such as described above is advantageous for a number of reasons. In particular, when the mold is manufactured to a sufficient degree of quality, the components may all be positioned within the mold which serves as a consistent dimensional reference. Consequently, the position of the shaft with respect to the outer diameter of the rotor (i.e. the concentricity of the rotor) is controlled with high precision,

As a result, the air gap in the assembled motor (i.e. the spacing between the outer surface of the rotor and the inner surface of the stator) can be controlled very precisely and consequently minimized, increasing the motor's performance and efficiency.

## Claims

1. Method for manufacturing a rotor (1) for an electric motor (2) of a wiper system for an automotive vehicle, the method comprising a step of overmolding at least one magnet (7) so as to form a chassis (22) of the rotor (1), wherein overmolding material covers a first end (24) of the shaft (8), a second end (25) of said shaft (8) being free from overmolding;
**characterized in that the method further comprises:**
a step of positioning a first ball bearing (27) in the chassis (22) of the rotor (1), an outer ring of the first ball bearing (27) being positioned against a seat formed integrally with said chassis (22) and an inner ring of said first ball bearing (27) being configured to be mounted upon a chassis of the motor (2), and a step of positioning a second ball bearing (28), an inner ring of the second ball bearing (28) being fitted on said second end (25) of the shaft (8) and an outer ring of the second ball bearing (28) being configured to be fixedly mounted in a chassis of the motor (2).

2. Method of the preceding claim, wherein at least one polar sheet (20) is overmolded with said at least one magnet (7).

3. Method of any of the preceding claims wherein the at least one magnet (7) has a cylindrical shape.

4. Method according to any one of the preceding claims, wherein a portion of at least one magnet (7) is exposed along a top line (30).

5. Rotor for an electric motor of a wiper system for an automotive vehicle, comprising a chassis (22) and a shaft (8), said chassis (22) comprising at least one magnet (7) overmolded on the shaft (7), wherein overmolding material covers a first end (24) of the shaft (8), a second end of said shaft (8) being free from overmolding,
**characterized in that**
the rotor further comprises a first ball bearing (27), an outer ring of said first ball bearing being positioned against a seat formed integrally with said chassis (22) and an inner ring of said first ball bearing (27) being configured to be mounted upon a chassis of the motor (2); and
an inner ring of a second ball bearing (28) being fitted on said second end (25) of the shaft (8) and an outer ring of said second ball bearing (28) being configured to be fixedly mounted in a chassis of the motor (2).

6. Electric motor comprising a rotor according to the preceding claim.

7. Wiper system comprising an electric motor according to the preceding claim.

## Patentansprüche

1. Verfahren zum Herstellen eines Rotors (1) für einen Elektromotor (2) eines Wischersystems für ein Kraftfahrzeug, wobei das Verfahren einen Schritt des Umspritzens wenigstens eines Magneten (7) umfasst, um so einen Rahmen (22) des Motors (1) zu bilden, wobei das Umspritzungsmaterial ein Ende (24) der Welle (8) abdeckt und ein zweites Ende (25) der Welle (8) nicht umspritzt ist;
**dadurch gekennzeichnet, dass** das Verfahren ferner Folgendes umfasst:
einen Schritt des Positionierens eines ersten Kugellagers (27) in dem Rahmen (22) des Rotors (1), wobei einen Außenring des ersten Kugellagers (27) gegen einen Sitz positioniert wird, der einteilig mit dem Rahmen (22) gebildet ist, und ein Innenring des ersten Kugellagers (27) konfiguriert ist, auf einem Rahmen des Motors (2) montiert zu werden, und einen Schritt des Positionierens eines zweiten Kugellagers (28), wobei ein Innenring des zweiten Kugellagers (28) an dem zweiten Ende (25) der Welle (8) befestigt wird und ein Außenring des zweiten Kugellagers (28) konfiguriert ist, in einem Rahmen des Motors (2) fest montiert zu werden.

2. Verfahren nach dem vorhergehenden Anspruch, wobei wenigstens eine Pollage (20) mit dem wenigstens einen Magneten (7) umspritzt wird.

3. Verfahren nach einem der vorhergehenden Ansprüche, wobei der wenigstens eine Magnet (7) eine zylindrische Form hat.

4. Verfahren nach einem der vorhergehenden Ansprüche, wobei ein Abschnitt wenigstens eines Magneten (7) längs einer oberen Linie (30) freiliegt.

5. Rotor für einen Elektromotor eines Wischersystems für ein Kraftfahrzeug, der einen Rahmen (22) und eine Welle (8) umfasst, wobei der Rahmen (22) wenigstens einen auf der Welle (7) umspritzten Magneten (7) aufweist, wobei das Umspritzungsmaterial ein erstes Ende (24) der Welle (8) abdeckt und ein zweites Ende der Welle (8) nicht umspritzt ist,
**dadurch gekennzeichnet, dass**
der Rotor ferner ein erstes Kugellager (27) umfasst, wobei ein Außenring des ersten Kugellagers gegen einen Sitz positioniert ist, der einteilig mit dem Rahmen (22) gebildet ist, und ein Innenring des ersten Kugellagers (27) konfiguriert ist, auf einem Rahmen des Motors (2) montiert zu sein; und
ein Innenring des zweiten Kugellagers (28) an dem zweiten Ende (25) der Welle (8) befestigt ist und ein Außenring des zweiten Kugellagers (28) konfiguriert ist, in einem Rahmen des Motors (2) fest montiert zu sein.

6. Elektromotor, der einen Rotor nach dem vorhergehenden Anspruch enthält.

7. Wischersystem, das einen Elektromotor nach dem vorhergehenden Anspruch enthält.

## Revendications

1. Procédé de fabrication d'un rotor (1) pour un moteur électrique (2) d'un système d'essuie-glace destiné à un véhicule automobile, le procédé comportant une étape consistant à surmouler au moins un aimant (7) de façon à former un châssis (22) du rotor (1), du matériau de surmoulage recouvrant une première extrémité (24) de l'arbre (8), une seconde extrémité (25) dudit arbre (8) étant exempte de surmoulage ;
**caractérisé en ce que** le procédé comporte en outre :
une étape consistant à positionner un premier roulement (27) à billes dans le châssis (22) du rotor (1), une bague extérieure du premier roulement (27) à billes étant positionnée contre une portée formée d'un seul tenant avec ledit châssis (22) et une bague intérieure dudit premier roulement (27) à billes étant configurée pour être montée sur un châssis du moteur (2), et une étape consistant à positionner un second roulement (28) à billes, une bague intérieure du second roulement (28) à billes étant ajustée sur ladite seconde extrémité (25) de l'arbre (8) et une bague extérieure du second roulement (28) à billes étant configuré pour être montée de manière fixe dans un châssis du moteur (2).

2. Procédé selon la revendication précédente, au moins une tôle polaire (20) étant surmoulée avec ledit ou lesdits aimants (7).

3. Procédé selon l'une quelconque des revendications précédentes, l'aimant ou les aimants (7) présentant une forme cylindrique.

4. Procédé selon l'une quelconque des revendications précédentes, une partie d'au moins un aimant (7) étant exposée le long d'une ligne supérieure (30).

5. Rotor pour un moteur électrique d'un système d'essuie-glace destiné à un véhicule automobile, comportant un châssis (22) et un arbre (8), ledit châssis (22) comportant au moins un aimant (7) surmoulée sur l'arbre (7), du matériau de surmoulage recouvrant une première extrémité (24) de l'arbre (8), une seconde extrémité dudit arbre (8) étant exempte de surmoulage, **caractérisé en ce que**
le rotor comporte en outre un premier roulement (27) à billes, une bague extérieure dudit premier roulement à billes étant positionnée contre une portée formée d'un seul tenant avec ledit châssis (22) et une bague intérieure dudit premier roulement (27) à billes étant configurée pour être montée sur un châssis du moteur (2) ; et
une bague intérieure d'un second roulement (28) à billes étant ajustée sur ladite seconde extrémité (25) de l'arbre (8) et une bague extérieure dudit second roulement (28) à billes étant configurée pour être montée de manière fixe dans un châssis du moteur (2).

6. Moteur électrique comportant un rotor selon la revendication précédente.

7. Système d'essuie-glace comportant un moteur électrique selon la revendication précédente.
